# EUROPÄISCHE PATENTSCHRIFT

(11) **EP 1 597 146 B1**
(45) Veröffentlichungstag und Bekanntmachung des Hinweises auf die Patenterteilung: **10.10.2007**
(21) Anmeldenummer: 03789334.4
(22) Anmeldetag: 18.12.2003
(51) Int. Cl.: B65B 9/04, B65B 51/10, B29C 65/00

(54) **BLISTER-VERPACKUNGSMASCHINE UND VERFAHREN ZU IHRER STEUERUNG**
BLISTER PACKAGING MACHINE AND METHOD FOR CONTROLLING THE SAME
MACHINE DE CONDITIONNEMENT SOUS EMBALLAGE-COQUE ET SON PROCEDE DE COMMANDE

(30) Priorität: 23.01.2003 DE 10302724
(43) Veröffentlichungstag der Anmeldung: 23.11.2005
(73) Patentinhaber: IWK Verpackungstechnik GmbH, 76297 Stutensee-Blankenloch (DE)
(72) Erfinder: CHRIST, Richard, 56581 Immelshausen (DE)
(74) Vertreter: Lasch, Hartmut
(86) Internationale Anmeldenummer: PCT/EP2003/014506
(87) Internationale Veröffentlichungsnummer: WO 2004/065219

(56) Entgegenhaltungen:
- EP-A- 0 519 529
- EP-A- 1 086 898
- US-A- 3 982 380
- US-A- 5 466 326
- US-A- 5 806 277

## Beschreibung

Die Erfindung betrifft ein Verfahren zur Steuerung einer Blister-Verpackungsmaschine gemäß dem Oberbegriff des Anspruchs 1.

Eine Blister-Verpackungsmaschine üblichen Aufbaus, wie sie in der US-A 5 806 277 beschrieben ist, umfasst eine Formstation, in der in eine Bodenfolie, die beispielsweise aus Kunststoff oder Aluminium bestehen kann, eine Vielzahl von napfförmigen Vertiefungen eingeformt werden, in die in einer nachgeschalteten Füllstation jeweils ein Produkt, beispielsweise eine pharmazeutische Tablette, eingelegt wird. Nach der Produktzuführung wird die Bodenfolie einer Siegelstation zugeführt. Unmittelbar vor oder innerhalb der Siegelstation wird eine Deckfolie zugeführt und auf die Bodenfolie aufgelegt. Durch Wärmeeinwirkung innerhalb der Siegelstation wird die Deckfolie dicht auf die Bodenfolie aufgesiegelt, wodurch das Produkt in der napfartigen Vertiefung eingeschlossen ist.

Die Formstation wird taktweise und somit diskontinuierlich betrieben. Die Siegelstation kann entweder ebenfalls taktweise betrieben werden, alternativ ist es auch bekannt, die Siegelstation kontinuierlich zu betreiben, wobei der Übergang vom taktweisen Betrieb der Formstation zum kontinuierlichen Betrieb der Siegelstation über eine Ausgleichsvorrichtung erfolgt.

Die Erfindung bezieht sich auf eine kontinuierlich arbeitende Siegelstation, für die eine Siegelwalze verwendet wird, die mittels einer Heizvorrichtung auf eine vorgegebene gewünschte Temperatur temperierbar ist. Die Bodenfolie wird zusammen mit der Deckfolie mit konstanter Transportgeschwindigkeit V durch die Siegelstation, d.h. durch den Spalt zwischen der Siegelwalze und einer Gegenwalze, befördert, wobei Wärme von der Siegelwalze auf die Folien übertragen wird und diese verbindet.

Die Wärmeübertragung zwischen der auf einer konstanten Temperatur gehaltenen Siegelwalze und den Folien ist abhängig von der Transportgeschwindigkeit V. Bei einer hohen Transportgeschwindigkeit ist die Kontaktzeit zwischen der Siegelwalze und den Folien relativ gering, so dass eine nur geringe Wärmemenge in die Folien eingebracht werden kann. Wenn zu wenig Wärme in die Folien eingebracht wird, besteht die Gefahr, dass die Siegelung unvollständig ist und somit die Dichtheit zwischen der Bodenfolie und der Deckfolie nicht gegeben ist. Bei einer geringen Transportgeschwindigkeit ist die Kontaktzeit zwischen der Siegelwalze und den Folien relativ groß, so dass eine große Wärmemenge in die Folien eingebracht wird, womit die Gefahr verbunden ist, dass die relativ wärmeempfindliche Deckfolie beschädigt wird. Auch in diesem Fall ist eine sichere Abdichtung zwischen der Bodenfolie und der Deckfolie nicht gewährleistet.

Um bei einer bekannten Blister-Verpackungsmaschine die vorgenannten Probleme zu vermeiden, wird die Verpackungsmaschine vor Inbetriebnahme auf eine gewünschte optimale Taktzahl bzw. die dazu direkt proportionale Transportgeschwindigkeit der Folien und eine dazu passende Temperatur der Siegelwalze eingestellt.

Falls aus produktionstechnischen Gründen vorübergehend eine geringere Taktzahl bzw. Transportgeschwindigkeit gewünscht ist, wird die Verpackungsmaschine angehalten und der Benutzer stellt die verringerte Taktzahl ein. Darüber hinaus versucht er aus seiner Erfahrung eine geeignete Temperatureinstellung für die Siegelwalze zu ermitteln und einzustellen. Dieses Vorgehen ist sehr mühsam und erfordert speziell geschultes Personal, wobei die Praxis gezeigt hat, dass es sehr lange dauert, bis durch Versuche eine geeignete, zu der verringerten Taktzahl passende Temperatur der Siegelwalze gefunden wird. In der Zwischenzeit steht die Verpackungsmaschine für den Produktionsprozess nicht zur Verfügung, was sehr unwirtschaftlich ist.

Die US-A 5 466 326 zeigt eine Blistermaschine, bei der die Siegelung mittels Heißluft erfolgt. Dabei ist ein Verfahren zur Steuerung der Siegelparameter vorgesehen, bei dem nach der Wahl eines veränderten Soll-Wertes der Transportgeschwindigkeit zunächst die Transportgeschwindigkeit der Folie verringert wird. Die Veränderung der Transportgeschwindigkeit wird erfasst und die Heißluft-Siegeleinheit wird in Abhängigkeit von der IST-Geschwindigkeit angesteuert. Dabei ist in der Steuerung eine Kennlinie für die Temperatur in Abhängigkeit von der Geschwindigkeit gespeichert. Somit ist vorgesehen, die Temperatur der Siegeleinheit in Abhängigkeit von der Geschwindigkeit einzustellen. Dies lässt sich zwar bei einer Heißluft-Siegelstation relativ schnell und unkompliziert erreichen, jedoch ist dieses Verfahren bei einer beheizten Siegelwalze nicht anwendbar, da die Temperatur der Siegelwalze aufgrund der relativ großen Masse und somit einer großen Wärmekapazität der Siegelwalze sich nur relativ langsam verändern lässt.

Der Erfindung liegt die Aufgabe zugrunde, ein Verfahren zur Steuerung einer Blister-Verpackungsmaschine zu schaffen, mit dem unabhängig von der Transportgeschwindigkeit der Folien eine vollständige Siegelung gewährleistet und eine Beschädigung der Folien vermieden ist.

Diese Aufgabe wird hinsichtlich des Verfahrens durch die Merkmale des Anspruchs 1 gelöst.

Dabei ist vorgesehen, dass die Heizvorrichtung der Siegelwalze bei Wahl eines verringerten Soll-Wertes Vₛ der Transportgeschwindigkeit in ihrer Leistung abgesenkt oder abgeschaltet wird, so dass eine Temperaturabsenkung der Siegelwalze durch natürliche Abkühlung erfolgt, und dass die Transportgeschwindigkeit in Abhängigkeit von der IST-Temperatur der Siegelwalze nachgeführt wird.

In einem Speicher der Maschine ist eine Kennlinie für den Zusammenhang zwischen der Transportgeschwindigkeit V und der Temperatur T der Siegelwalze gespeichert. Auf diese Weise ist jeder Folien-Transportgeschwindigkeit, die innerhalb eines zulässigen Arbeitsbereiches der Transportgeschwindigkeit liegt, eine optimale Temperatur T der Siegelwalze zugeordnet. Wenn der Benutzer nunmehr eine verringerte Transportgeschwindigkeit wünscht, werden die Temperatur der Siegelwalze und die Transportgeschwindigkeit mittels einer Steuervorrichtung entlang oder zumindest nahe der vorgegebenen Kennlinie soweit vermindert, bis die gewünschte Transportgeschwindigkeit und die dazugehörige Temperatur der Siegelwalze erreicht sind. Auf diese Weise ist sichergestellt, dass auch bei Veränderung der Transportgeschwindigkeit und der Temperatur der Siegelwalze diese beiden Werte in jedem Zustand so aufeinander abgestimmt sind, dass eine gute Siegelqualität der Deckfolie auf der Bodenfolie gewährleistet ist.

Als weiterer Vorteil des erfindungsgemäßen Verfahrens ergibt sich, dass die Änderung der Transportgeschwindigkeit und der Temperatur der Siegelwalze auch während des Betriebes der Verpackungsmaschine erfolgen kann, da durch die maschinenintern gespeicherte Kennlinie sichergestellt ist, dass auch dann eine gute Siegelqualität erreicht wird, wenn die Steuervorrichtung die Transportgeschwindigkeit und die Temperatur der Siegelwalze verändert.

Wie oben bereits ausgeführt wurde, ist der Siegelstation eine taktweise arbeitende Formstation vorgeschaltet, wobei der Übergang vom taktweisen Betrieb der Formstation zum kontinuierlichen Betrieb der Siegelstation über geeignete, an sich bekannte Ausgleichsvorrichtungen erfolgt. Die Taktzahl der Formstation und die Transportgeschwindigkeit der Folien in der Siegelstation sind direkt proportional und so angepasst, dass ein kontinuierlicher Betrieb der Verpackungsmaschine über einen langen Zeitraum gewährleistet ist. In der Praxis hat es sich gezeigt, dass die Taktzahl N der Formstation für den Benutzer ein wesentlich besser handhabbarer Wert als die Transportgeschwindigkeit der Folien in der Siegelstation ist. In bevorzugter Ausgestaltung der Erfindung ist deshalb vorgesehen, dass der Benutzer eine Veränderung der Transportgeschwindigkeit nicht direkt anwählt oder eingibt, sondern der Steuervorrichtung eine neue gewünschte Taktzahl der Formstation eingibt und somit vorwählt, woraus in einer Recheneinheit die entsprechende Transportgeschwindigkeit errechnet wird. Statt dieser mittelbaren Vorgabe der Transportgeschwindigkeit der Folien in der Siegelstation über die Taktzahl der Formstation kann ein Soll-Wert der Transportgeschwindigkeit jedoch auch direkt vorgewählt werden.

Gemäß der Erfindung ist vorgesehen, dass jedem Wert Vᵢ der Transportgeschwindigkeit ein zulässiger Temperaturbereich der Temperatur T der Siegelwalze zugeordnet ist, wobei der zulässige Temperaturbereich definiert ist durch den entsprechenden Wert der Kennlinie ± einem Toleranzwert ΔT. Dem liegt die Erkenntnis zugrunde, dass eine gute Siegelqualität der Deckfolie nicht nur bei einem bestimmten Temperaturwert gegeben ist, sondern das der Temperaturwert auch in geringem Maße, beispielsweise ± 5°C, von dem optimalen Temperaturwert gemäß der Kennlinie abweichen kann, ohne die Sigelqualität signifikant zu verschlechtern.

Wenn der Benutzer einen neuen verringerten Soll-Wert der Transportgeschwindigkeit der Folien wählt, wird die Ist-Temperatur Tᵢ der Siegelwalze durch natürliche Abkühlung unter Beibehaltung der aktuellen Transportgeschwindigkeit geringfügig innerhalb des zugeordneten zulässigen Temperaturbereichs verringert und dann die Transportgeschwindigkeit in Abhängigkeit von der dann gegebenen Ist-Temperatur der Siegelwalze nachgeführt.

Die Siegelwalze besitzt eine Heizvorrichtung mit einer entsprechenden Steuerung oder Regelung, wodurch die Temperatur der Siegelwalze auf einen gewünschten Wert erhöht und auf diesem gehalten werden kann. Um die Temperatur der Siegelwalze abzusenken, wird die Heizvorrichtung lediglich in ihrer Leistung abgesenkt oder abgeschaltet, so dass die Temperaturabsenkung der Siegelwalze durch natürliche Abkühlung erfolgt.

Weitere Einzelheiten und Merkmale der Erfindung sind aus der folgenden Beschreibung eines Ausfizhrungsbeispiels unter Bezugnahme auf die Zeichnung ersichtlich. Es zeigen:
- Figur 1: einen Schnitt durch eine Siegelstation einer Blister-Verpackungsmaschine und
- Figur 2: eine Kennlinie für den Zusammenhang zwischen der Transportgeschwindigkeit V der Temperatur T.

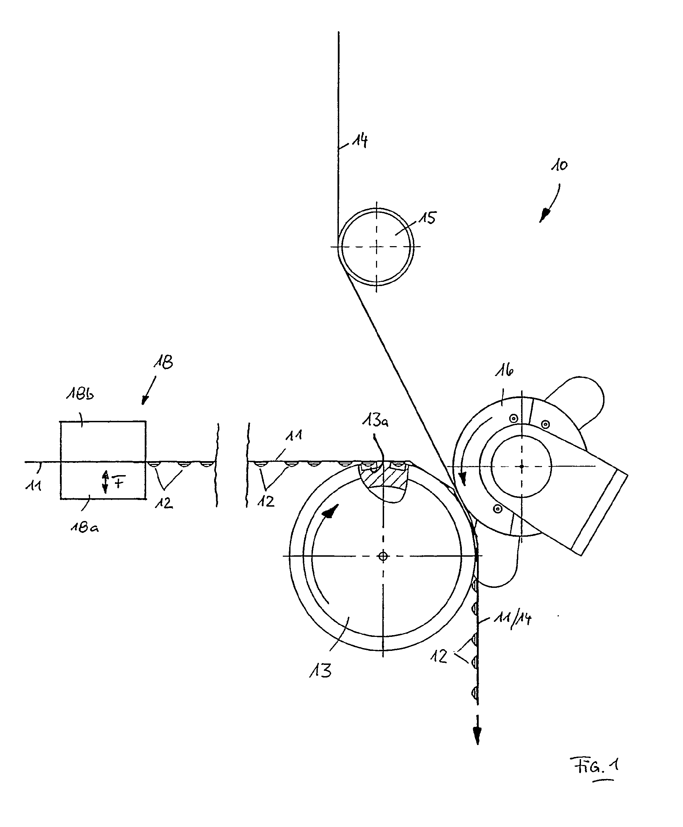

Fig. 1 zeigt den Aufbau einer Siegelstation 10 einer Blister-Verpackungsmaschine. Die Siegelstation 10 umfasst eine drehangetriebene Indexwalze 13, die auf ihrer Außenoberfläche mit einer Vielzahl von Ausnehmungen 13a versehen ist. Der Indexwalze 13 ist eine rotierende Siegelwalze 16 zugeordnet, die mittels einer nicht dargestellten Heizvorrichtung temperierbar ist und auf einer gewünschten Temperatur gehalten werden kann.

Der Siegelstation 10 ist eine Formstation 18 vorgeschaltet, die eine obere Formplatte 18b und eine von dieser abhebbare untere Formplatte 18a umfasst, wie durch den Doppelpfeil F angedeutet ist. Der Formstation 18 wird eine Bodenfolie 11 zugeführt, die in der Formstation 18 mit einer Vielzahl von napfartigen Vertiefungen 12 versehen wird, die Aufnahmen bilden und in einer nicht dargestellten Füllstation zwischen der Formstation 18 und der Siegelstation 10 mit einem Produkt gefüllt werden. Die mit dem Produkt gefüllte Bodenfolie 11 läuft dann auf die Indexwalze 13, wobei die napfartigen Vertiefungen 12 in den Ausnehmungen 13a der Indexwalze 13 liegen.

Von einem nicht dargestellten Vorrat wird eine aus Kunststoff oder Aluminium bestehende Deckfolie 14 über eine Umlenkrolle 15 der Siegelstation 10 zugeführt und unmittelbar vor dem Spalt zwischen der Indexwalze 13 und der Siegelwalze 16 auf die Bodenfolie 11 aufgelegt. Mittels der Siegelwalze 16 wird Wärmeenergie in die Folien eingebracht, wodurch die Deckfolie 14 auf die Bodenfolie 11 aufgesiegelt wird. Auf diese Weise sind die Produkte in den napfartigen Vertiefungen 12 der Bodenfolie 11 eingeschlossen.

Während die Formstation 18 taktweise mit einer Taktzahl N arbeitet, durchlaufen die Bodenfolie 11 und die Deckfolie 14 die Siegelstation 10 mit konstanter Transportgeschwindigkeit V. Der Übergang vom taktweisen Betrieb der Formstation 18 zu dem kontinuierlichen Betrieb der Siegelstation 10 erfolgt über eine nicht dargestellte übliche Ausgleichsvorrichtung.

Die Wärmeübertragung zwischen der Siegelwalze 16 und der Bodenfolie 11 bzw. der Deckfolie 14 ist abhängig von der Transportgeschwindigkeit V der Folien innerhalb der Siegelstation 10. Mit der Transportgeschwindigkeit V ändert sich auch die Kontaktzeit zwischen der Siegelwalze 16 und den Folien 11 bzw. 14 und somit auch die in die Folien eingebrachte Wärmemenge. Dabei werden die Transportgeschwindigkeit V der Folien und die Temperatur T der Siegelwalze immer in einer vorbestimmten, aufeinander abgestimmten Beziehung gehalten, wobei auch während der Veränderung der Transportgeschwindigkeit und der Temperatur T in jedem Zustand gewährleistet ist, dass die aktuelle Transportgeschwindigkeit der Folien zu der aktuellen Temperatur der Siegelwalze passt und mit dieser gute Siegelergebnisse bringt.

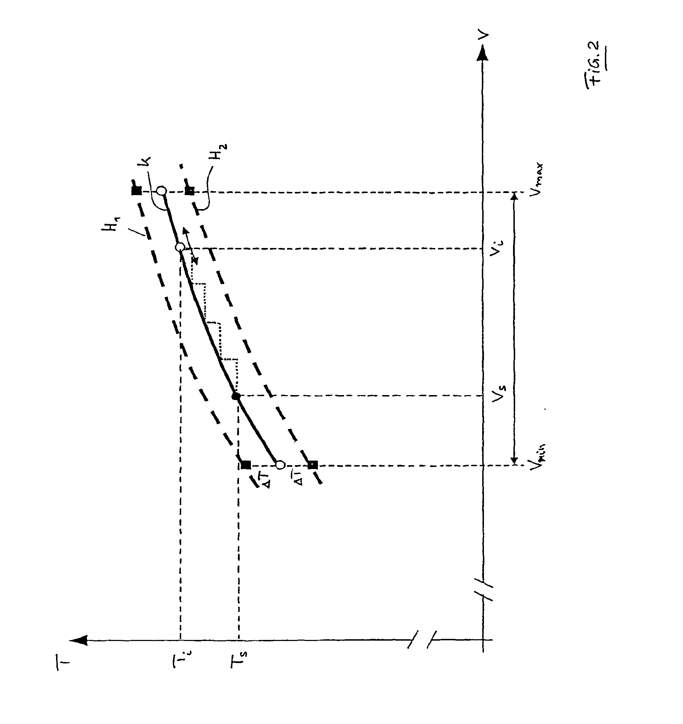

In einem Daten-Speicher der Verpackungsmaschine ist eine in Fig. 2 schematisch dargestellte Kennlinie K gespeichert, die innerhalb eines zulässigen, vorgegebenen Bereichs für die Transportgeschwindigkeit V zwischen Vₘᵢₙ und Vₘₐₓ eine eindeutige Beziehung zwischen der Transportgeschwindigkeit V der Folien innerhalb der Siegelstation 10 und der Temperatur T der Siegelwalze 16 definiert. Auf beiden Seiten der Kennlinie K verläuft jeweils eine Hüllkurve H₁ bzw. H₂, die jeweils in einem Abstand ΔT von der Kennlinie K parallel zu dieser verlaufen. Während die Kennlinie K zu jedem Wert der Transportgeschwindigkeit V den optimalen Wert der Temperatur T der Siegelwalze definiert, ist durch die beiden Hüllkurven H₁ und H₂ zu jedem Wert der Transportgeschwindigkeit V ein zulässiger Bereich für die Temperatur T der Siegelwalze definiert, wobei sich der zulässige Bereich ergibt, zu K(V) ± ΔT.

Zur Erläuterung sei angenommen, dass die Verpackungsmaschine mit einer aktuellen Transportgeschwindigkeit Vᵢ und einer zugehörigen Temperatur Tᵢ der Siegelwalze arbeitet. Von einem Benutzer ist nun gewünscht, die Transportgeschwindigkeit auf einen Sollwert Vₛ abzusenken. Wie sich aus Fig. 2 ergibt, liegt der aktuelle Temperaturwert Tᵢ außerhalb des zulässigen Temperaturbereichs, der dem gewünschten Soll-Wert Vₛ der Transportgeschwindigkeit zugeordnet ist.

Um die Transportgeschwindigkeit vom aktuellen Wert Vᵢ auf den Sollwert Vₛ und die Temperatur vom aktuellen Wert Tᵢ auf den Sollwert Tₛ abzusenken, wird zunächst die Leistung der Heizvorrichtung abgesenkt oder abgeschaltet, so dass die Temperatur durch natürliche Abkühlung um ein geringes Maß absinkt. Dann wird die Transportgeschwindigkeit entsprechend soweit nachgeführt oder abgesenkt, bis sowohl die Transportgeschwindigkeit ihren Sollwert Vₛ als auch die Temperatur ihren Sollwert Tₛ erreicht haben. Wie sich aus Fig. 2 ergibt, liegt der jeweilige Ist-Wert der Transportgeschwindigkeit und auch der Ist-Wert der Temperatur in jedem Zustand während der Verstellung der Verpackungsmaschine innerhalb des zulässigen Bereichs zwischen den Hüllkurven H₁ und H₂.

## Patentansprüche

1. Verfahren zur.Steuerung einer Blister-Verpackungsmaschine, wobei eine mit napfförmigen Aufnahmen (12) versehene Bodenfolie (11) in oder vor einer Siegelstation (10) mit einer Deckfolie (14) zusammengeführt und mit einer konstanten Transportgeschwindigkeit V durch die Siegelstation (10) hindurchgeführt wird, wobei in der Siegelstation (10) eine mittels einer Heizvorrichtung temperierbare Siegelwalze (16) vorgesehen ist, mittels der die Deckfolie (14) auf die Bodenfolie (11) aufgesiegelt wird, und wobei die Transportgeschwindigkeit (V) zumindest mittelbar vorwählbar ist, **dadurch gekennzeichnet, dass** die Heizvorrichtung der Siegelwalze (16) bei Wahl eines verringerten Soll-Wertes Vₛ der Transportgeschwindigkeit in ihrer Leistung abgesenkt oder abgeschaltet wird, so dass eine Temperaturabsenkung der Siegelwalze (16) durch natürliche Abkühlung erfolgt, und dass die Transportgeschwindigkeit in Abhängigkeit von der Ist-Temperatur der Siegelwalze (16) nachgeführt wird, wobei jedem Wert Vᵢ der Transportgeschwindigkeit ein zulässiger Temperaturbereich der Temperatur T der Siegelwalze (16) zugeordnet ist und die Temperatur T der Siegelwalze (16) auf einem Wert innerhalb des zugeordneten zulässigen Temperaturbereichs gehalten wird.

2. Verfahren nach Anspruch 1, **dadurch gekennzeichnet, dass** der Siegelstation (16) eine taktweise arbeitende Formstation (18) vorgeschaltet ist, dass die Transportgeschwindigkeit v direkt proportional der Taktzahl N der Formstation (18) ist und dass die Taktzahl N vorwählbar ist.

## Claims

1. Method for controlling a blister packaging machine, wherein a bottom sheet (11) provided with cup-shaped receptacles (12) is combined with a cover sheet (14) in or upstream of a sealing station (10) and is guided at a constant transport speed V through the sealing station (10), wherein a sealing roller (16), which can be temperature-controlled by a heating device, is provided in the sealing station (10) for sealing the cover sheet (14) onto the bottom sheet (11) and wherein the transport speed (V) can be pre-selected in at least an indirect manner, **characterized in that** when a lower value Vₛ of the transport speed is selected, the sealing roller (16) heating device is switched-off or its power reduced to effect a temperature reduction of the sealing roller (16) through natural cooling, wherein the transport speed is adjusted in dependence on the actual temperature of the sealing roller (16), wherein each value Vᵢ of the transport speed has an associated acceptable range for the temperature T of the sealing roller (16) and the temperature T of the sealing roller (16) is kept at a value within this acceptable temperature range.

2. Method according to claim 1, **characterized in that** a forming station (18), which is operated in cycles, is connected upstream of the sealing station (16), wherein the transport speed V is directly proportional to the cycle rate N of the forming station (18) and the cycle rate N is pre-selectable.

## Revendications

1. Procédé de commande d'une machine de conditionnement sous blisters, dans lequel une feuille de fond (11) présentant des logements (12) en forme de cuvette est jointe à une feuille de couverture (14) dans ou devant une station de scellage (10) et acheminée à travers la station de scellage (10) à une vitesse de transport V constante, dans lequel on prévoit dans la station de scellage (10) un cylindre de scellage (16) dont la température peut être équilibrée par un dispositif de chauffage, cylindre au moyen duquel on scelle la feuille de couverture (14) sur la feuille de fond (11), et dans lequel la vitesse de transport (V) peut être au moins indirectement présélectionnée, **caractérisé en ce que** l'on réduit ou l'on arrête le débit du dispositif de chauffage du cylindre de scellage (16) en choisissant une valeur de consigne réduite Vₛ de la vitesse de transport, de sorte qu'il en résulte une diminution de la température du cylindre de scellage (16) par un refroidissement naturel, et que la vitesse de transport est asservie à la température effective du cylindre de scellage, dans lequel à chaque valeur Vᵢ de la vitesse de transport correspond une zone de température admissible de la température T du cylindre de scellage (16) et la température T du cylindre de scellage (16) est maintenue à une valeur située dans la zone de température admise correspondante.

2. Procédé selon la revendication 1, **caractérisé en ce qu'**une station de formage (18) travaillant en cadence précède la station de scellage (16), **en ce que** la vitesse de transport V est directement proportionnelle au nombre de cadences N de la station de formage (18) et **en ce que** le nombre de cadences N peut être présélectionné.
